# EUROPÄISCHE PATENTANMELDUNG

(11) **EP 1 331 455 A1**
(43) Veröffentlichungstag der Anmeldung: **30.07.2003**
(21) Anmeldenummer: 02001716.6
(22) Anmeldetag: 24.01.2002
(51) Int. Cl.: F24F 11/00, F24F 12/00

(54) **Lüftungsgerät und Verfahren zur Steuerung eines Lüftungsgeräts**

(71) Anmelder: SÜDDEUTSCHE ETNA-WERK GMBH, D-81675 München (DE)
(72) Erfinder: Hartwig, Manfred, 85567 Grafing (DE); Straub, Gerhard, 85598 Baldham (DE)
(74) Vertreter: Schurack, Eduard F.

(57) **Zusammenfassung**

Die Erfindung betrifft ein Lüftungsgerät (1) zur Belüftung eines Raumes, das zumindest einen Ventilator (31, 32, 33), sowie zumindest jeweils eine Öffnung (111, 112) an der Innenseite (11), die im eingebauten Zustand dem zu belüftenden Raum (2) zugewandt ist und eine Öffnung (121, 122) an der Außenseite (12) aufweist, die im eingebauten Zustand dem zu belüftenden Raum (2) abgewandt ist, wobei das Lüftungsgerät (1) eine Steuereinheit (5, R) umfasst, die der Steuerung oder Regelung mindestens eines einen Luftstrom durch das Lüftungsgerät beeinflussenden Elements in Abhängigkeit des Luftstroms, der durch die auf der Außenseite (12) des Gerätes vorgesehene Öffnung (121, 122) fließt, dient. Die Erfindung betrifft weiterhin ein Verfahren zur Steuerung des Lüftungsgeräts.

## Beschreibung

Die vorliegende Erfindung betrifft ein Lüftungsgerät zur Belüftung eines Raums, insbesondere ein Lüftungsgerät nach dem Oberbegriff von Patentanspruch 1, und ein Verfahren zur Steuerung eines Lüftungsgeräts.

Zur Belüftung von Räumen kann außer dem sogenannten Stoßlüften, bei dem ein Fenster geöffnet wird, um Frischluft in den Raum zu lassen, auch ein Lüftungsgerät verwendet werden. In derartigen Lüftungsgeräten werden die Luftströme der Abluft und der Zuluft in der Regel mittels Ventilatoren in dem Lüftungsgerät erzeugt. Der Nachteil bei der Verwendung von Ventilatoren besteht einerseits darin, daß für deren Betrieb Energie benötigt wird, andererseits durch deren Betrieb Geräusche entstehen.

Aufgabe der vorliegenden Erfindung ist es daher, ein Lüftungsgerät und ein Verfahren zur Steuerung eines Lüftungsgeräts zu schaffen, die eine Steuerung des Lüftungsgeräts zulassen, mittels derer das Lüftungsgerät ohne baulichen Aufwand energiesparend und geräuscharm betrieben werden kann.

Der Erfindung liegt die Erkenntnis zugrunde, dass diese Aufgabe durch ein Lüftungsgerät gelöst werden kann, das die Umgebungsbedingungen beim Betrieb des Lüftungsgeräts sinnvoll nutzen kann.

Die Aufgabe wird daher durch ein Lüftungsgerät zur Belüftung eines Raums gelöst, das zumindest einen Ventilator sowie zumindest jeweils eine Öffnung an der Innenseite, die im eingebauten Zustand dem zu belüftenden Raum zugewandt ist und eine Öffnung an der Außenseite aufweist, die im eingebauten Zustand dem zu belüftenden Raum abgewandt ist, wobei das Lüftungsgerät (1) eine Steuereinheit (5, R) umfasst, die der Steuerung oder Regelung mindestens eines einen Luftstrom durch das Lüftungsgerät beeinflussenden Elements in Abhängigkeit des Luftstroms, der durch die auf der Außenseite (12) des Gerätes vorgesehene Öffnung (121, 122) fließt, dient.

Durch die erfindungsgemäße Maßnahme kann auf unterschiedliche Verhältnisse, insbesondere auf Wind, der auf die Außenseite des Lüftungsgeräts wirkt, eingegangen werden. Dadurch ergibt sich der Vorteil, daß die zusätzliche Antriebswirkung von Wind auf die Zufuhr von Zuluft berücksichtigt werden kann.

Bevorzugt ist das mindestens eine einen Luftstrom durch das Lüftungsgerät beeeinflussende Element der zumindest eine Ventilator und/oder mindestens ein Schließelement für die jeweils mindestens eine Öffnung ist.

Durch das Vorsehen von Schließelementen kann die Luftführung in dem Lüftungsgerät beeinflusst werden. Hierbei ist wesentlich, dass die Schließelemente mit einer Steuereinheit verbunden sind, die die Schließelemente entsprechend den Umgebungsbedingungen und den internen Bedingungen in dem Steuergerät steuern bzw. regeln kann. So kann beispielsweise durch Schließen eines Schließelements der Luftstrom in einem Luftweg zumindest reduziert oder ganz abgestellt werden. Insbesondere bei Lüftungsgeräten, die über einen Wärmeübertrager verfügen, um eine Aufwärmung der Zuluft durch die Abluft zu ermöglichen, ergibt sich dadurch der Vorteil, daß - sofern dies gewünscht ist - Kondensation von Abluftfeuchte wirksam vermieden werden kann. Das Ausmaß der Kondensation hängt nämlich unter anderem von der zugeführten Menge an Zuluft ab. Wird dieser Wert, beispielsweise durch Winddruck, erhöht, obwohl die Ventilatorleistung konstant gehalten wird, so kann es zu unerwünschter Kondensation, und daher zu Korrosion, Schimmelbildung und dergleichen kommen. Erfindungsgemäß wird der Winddruck erfaßt und die Öffnung für Zuluft durch Verstellen des Schließelements entsprechend reduziert.

Alternativ oder zusätzlich kann bei dem erfindungsgemäßen Lüftungsgerät auch vorgesehen werden, dass die Steuereinheit auch die Steuerung oder Regelung des mindestens einen Ventilators durchführt. Dadurch kann dessen Betrieb den Erfordernissen und den Umgebungsbedingungen angepasst und dieser gegebenenfalls ganz abgeschaltet werden. Wird beispielsweise festgestellt, daß auf die Öffnung für die Zuführung von Außenluft aufgrund von Wind ein erhöhter Druck wirkt, so kann die dem Zuluftventilator zugeführte Energie reduziert werden. Im Idealfall kann der Zuluftventilator gänzlich abgeschaltet werden. Dies resultiert in einer Einsparung von Antriebsenergie, die für den Betrieb des mindestens einen Ventilators notwendig ist. Besonders vorteilhaft wirkt sich diese Steuerung aus in Gebieten, in denen regelmäßig mit Wind zu rechnen ist, beispielsweise am Meer. Bei Ausnutzung des Winds kann daher morgens oder abends der Zuluftventilator mit niedrigerer Leistung betrieben werden.

Zur Erfassung von Daten über Zustände in dem Lüftungsgerät und in der Umgebung kann die Steuereinheit mit mindestens einer Messeinrichtung verbunden sein. Durch diese Messeinrichtung können der Steuereinheit somit die Informationen zur Verfügung gestellt werden, die zu einer effizienten Steuerung des Lüftungsgeräts notwendig sind.

In einer Ausführungsform umfasst die Messeinrichtung eine Messeinheit zur Messung des Luftstroms, der durch die auf der Außenseite des Gerätes vorgesehene Öffnung fließt. Dadurch kann die Antriebsleistung des zugehörigen Ventilators gesteuert oder geregelt werden, beispielsweise auf einen vorgebbaren Wert des Luftdurchsatzes.

Vorzugsweise umfasst die Steuereinrichtung eine Soll-Wert-Einheit, in der vorgegebene Soll-Werte, insbesondere für Eigenschaften der Luftströmung, eingegeben sind. Die Eingabe dieser Werte kann manuell erfolgen, oder mittels eines Rechners aus gemessenen Zustandswerten berechnet werden.

Die Steuereinheit kann weiterhin eine Vergleichseinheit aufweisen, die gemessene Ist-Werte mit Soll-Werten vergleicht. Im Hinblick auf das Ergebnis eines derartigen Vergleichs können dann das mindestens eine Schließelement und/oder der mindestens eine Ventilator gesteuert oder geregelt werden.

Die Erfindung betrifft weiterhin ein Verfahren zur Steuerung eines Lüftungsgeräts, das zumindest einen Ventilator und zumindest jeweils eine Öffnung an der Innenseite, die im eingebauten Zustand dem zu belüftenden Raum zugewandt ist, und eine Öffnung an der Außenseite aufweist, die im eingebauten Zustand dem zu belüftenden Raum abgewandt ist, sowie eine Steuereinheit aufweist, wobei der mindestens eine Ventilator und/oder mindestens ein Schließelement für die mindestens eine Öffnung in Abhängigkeit von gemessenen Luftströmungswerten gesteuert oder geregelt werden.

Bevorzugt wird die Steuereinheit in Abhängigkeit des Luftstroms, der durch die auf der Außenseite des Gerätes vorgesehene Öffnung fließt, den Antrieb des mindestens einen Ventilators steuern oder regeln. Der Luftstrom, der durch die auf der Außenseite des Gerätes vorgesehene Öffnung fließt, kann beispielsweise bei Wind stark genug sein, so dass ein Betrieb des mindestens einen Ventilators mit reduzierter Leistung, eventuell sogar ein Abschalten dieses Ventilators ermöglicht wird. Auf diese Weise läßt sich zumindest ein Anteil der Antriebsenergie des Ventilators einsparen. Geräusche, die durch den Betrieb des Ventilators entstehen und deren Ausmaß mit der Drehzahl des Ventilators korreliert ist, werden zumindest reduziert.

Vorzugsweise wird der Antrieb des mindestens einen Ventilators als Funktion des Luftstroms, der durch die in der Außenseite des Gerätes vorgesehene Öffnung fließt, und in Abhängigkeit vorgegebener Soll-Werte gesteuert oder geregelt. Damit kann ein zu starker Luftstrom in das Lüftungsgerät und in den zu belüftenden Raum, der zu Geräuschentwicklung und zu Unbehagen bei den in dem zu belüftenden Raum befindlichen Personen führen kann, vermieden werden. Vorzugsweise wird daher die Öffnung an der Außenseite des Lüftungsgeräts zumindest teilweise geschlossen, wenn der auf die in der Außenseite des Gerätes vorgesehene Öffnung wirkende Luftstrom einen Grenzwert übersteigt.

Wie bereits erwähnt, wird die Antriebsleistung des Ventilators vorzugsweise gesenkt, wenn der Wert des Luftstroms, der durch die auf der Außenseite des Gerätes vorgesehene Öffnung fließt, ansteigt.

Die Steuereinheit regelt oder steuert die Schließelemente vorzugsweise erst dann, wenn der mindestens eine Ventilator nicht mehr angetrieben wird, d.h. wenn keine Antriebsleistung für den Ventilator mehr aufgebracht werden muß. Durch diese Maßnahme wird sichergestellt, daß zunächst zur Berücksichtigung des auf die zugehörige Öffnung wirkenden Winds die Ventilatorleistung zurückgefahren wird und damit Energie eingespart wird, bevor schließlich, falls die Luftströmung noch immer zu groß ist, mit einem Schließen des zugehörigen Schließelements begonnen wird.

Die Steuereinheit steuert oder regelt den mindestens einen Ventilator und die Schließelemente vorzugsweise so, dass ein vorgegebener Wert eines Luftstroms in dem Lüftungsgerät eingestellt wird.

Die Erfindung wird im Folgenden anhand der Zeichnungen genauer beschrieben, wobei die Zeichnungen Beispiele von Ausführungsformen der Erfindung darstellen.

Es zeigen:
Figur 1: eine schematische Längsschnittansicht des mittleren Teils des erfindungsgemäßen Lüftungsgeräts;
Figur 2: eine schematische Querschnittansicht des erfindungsgemäßen Lüftungsgeräts;
Figur 3a bis e: eine Ausführungsform eines Lüftungsgeräts in verschiedenen Ansichten, wobei der Luftweg der Zuluft angedeutet ist;
Figur 4a bis e: eine Ausführungsform eines Lüftungsgeräts in verschiedenen Ansichten, wobei der Luftweg der Abluft angedeutet ist;
Figur 5a bis e: eine Ausführungsform eines Lüftungsgeräts in verschiedenen Ansichten, wobei der Luftweg der Umluft angedeutet ist;
Figur 6: eine schematisches Blockdiagramm, das die verschiedenen Luftströme andeutet; und
Figur 7: ein schematisches Schaltdiagramm, das schematisch die Regelungstechnik des Lüftungsgeräts darstellt.

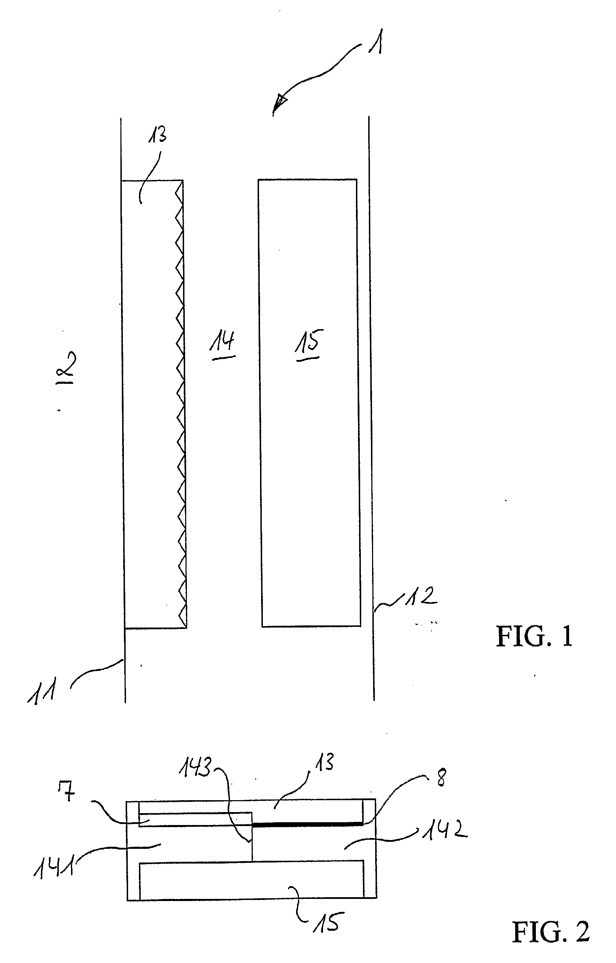

In Figur 1 ist eine schematische Längsschnittansicht des mittleren Bereichs eines Lüftungsgeräts 1 gemäß der vorliegenden Erfindung dargestellt. Auf der Innenseite 11 des Lüftungsgeräts 1, die dem zu belüftenden Raum 2 zugewandt ist, ist in der dargestellten Ausführungsform ein Radiator 13 vorgesehen. Dieser kann vorzugsweise den größten Bereich der Innenseite 11 des Lüftungsgeräts 1 bilden. An den Radiator 13 schließt sich in Richtung der Außenseite 12 des Lüftungsgeräts ein Kanal 14 an, durch den Luft passieren und gegebenenfalls an dem Radiator 13 entlang strömen kann. An den Kanal 14 schließt sich schließlich ein Wärmeübertragungselement 15 an, das von Luft durchströmt werden kann.

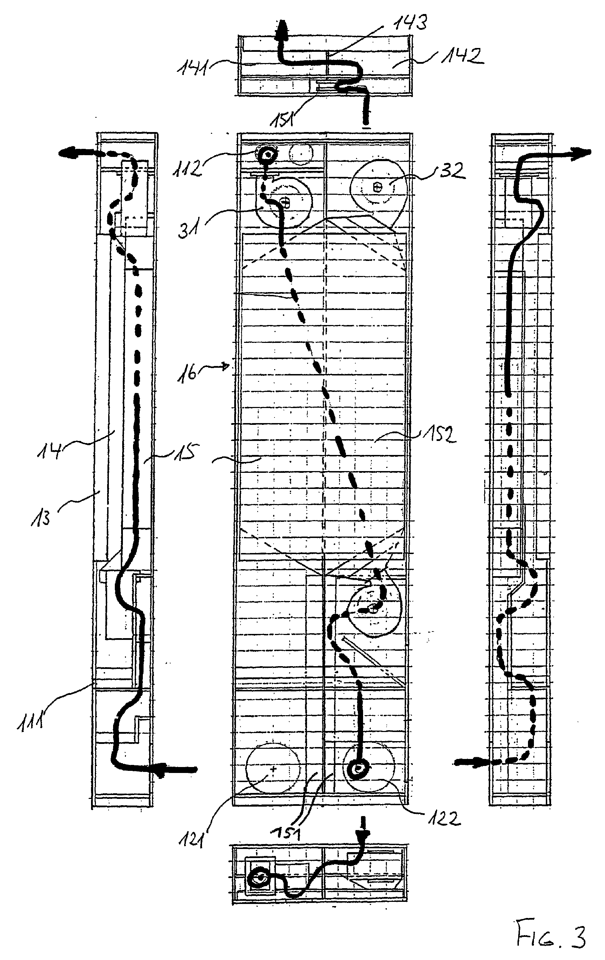

Während durch das Wärmeübertragungselement 15 die über die Außenseite 12 angesaugte Außenluft und die über die Innenseite 11 angesaugte Abluft geleitet werden, dient der Kanal 14 der Luftführung der von der Innenseite 11 angesaugten Abluft und der Umluft. Die genaue Luftführung in dem Lüftungsgerät 1 wird unter Bezugnahme auf die Figuren 3 bis 5 später detaillierter erläutert. Wie in Figur 2 zu erkennen ist, ist der Kanal 14 vorzugsweise zweigeteilt, so dass dieser zwei Kammern 141 und 142 umfasst, die sich in vertikaler Richtung des Lüftungsgeräts erstrecken. Die Kammern können, wie in Figur 2 angedeutet, durch eine Trennwand 143 gebildet werden. Diese Trennwand 143 kann isoliert sein, um einen Wärmeaustausch zwischen dem Luftstrom in den Kammern 141 und 142 zu verhindern. Der Radiator 13 weist in der dargestellten Ausführungsform an der Innenseite 11 des Lüftungsgeräts eine glatte Oberfläche und an der dem Kanal 14 zugewandten Seite teilweise eine berippte Oberfläche 7 auf. Der berippte Bereich 7 des Radiators 13 erstreckt sich in der Kammer 141, während der Bereich 8, in dem der Radiator mit der anderen Kammer 142 in Kontakt steht, vorzugsweise isoliert ist. In der Kammer 141 kann daher die Luft an einer vergrößerten Oberfläche des Radiators 13 entlang geführt werden. Wird der Radiator 13 als Heizelement eingesetzt, erfolgt über die aufgrund der Rippen vergrößerte Oberfläche des Radiators 13 eine zusätzliche Aufheizung der durch die Kammer 141 strömenden Luft. Diese Kammer 141 wird vorzugsweise zur Führung der Umluft verwendet, die aus dem zu belüftenden Raum 2 entnommen und in diesen wieder eingeführt wird. Auf diese Weise kann die Wärmeabgabe des Radiators gegenüber der reinen Konvektion und Strahlung über die Innenseite 11 an den zu belüftenden Raum durch die erzwungene Konvektion, die in der Kammer 141 erfolgt, vergrößert werden.

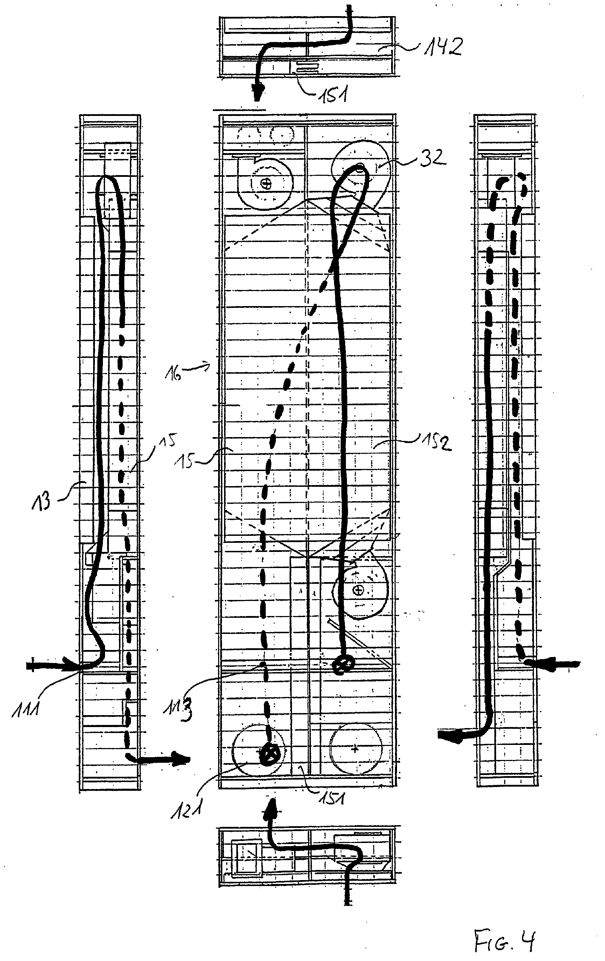

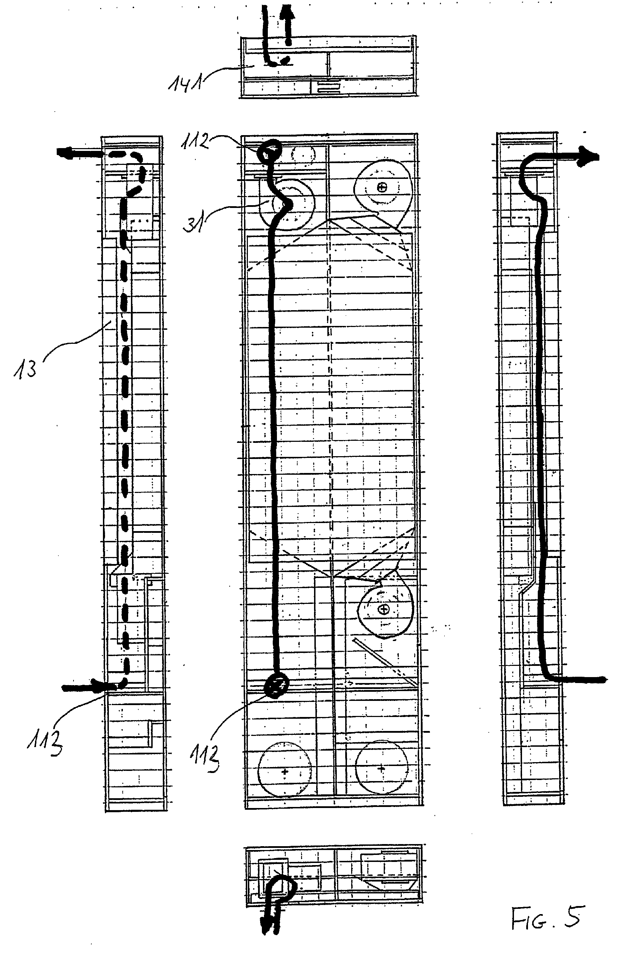

Unter Bezugnahme auf die Figur 3 soll nun zunächst der Aufbau einer Ausführungsform eines erfindungsgemäßen Lüftungsgeräts 1 beschrieben werden. In den Figuren 4 und 5 sind die gleichen Ansichten wie in Figur 3 gezeigt, so dass nur die für die Beschreibung wesentlichen Teile in diesen Figuren beziffert sind. Das Lüftungsgerät 1, das beispielsweise eine Höhe von über 1,5m, vorzugsweise eine Höhe von 2m, eine Breite von beispielsweise 0,5m und eine Tiefe von beispielsweise 0,2m aufweisen kann, ist in Figur 3 jeweils als Querschnitt in fünf Ansichten gezeigt, und zwar in Frontansicht, Ansicht von rechts und von links sowie Ansicht von oben und von unten. Im oberen Bereich des Lüftungsgeräts sind zwei Ventilatoren 31 und 32 vorgesehen, die über die Breite des Lüftungsgeräts gesehen nebeneinander angeordnet sind. Unterhalb dieser Ventilatoren erstreckt sich über einen großen Bereich der Höhe des Lüftungsgeräts 1 der zentrale Bereich 16. In diesem zentralen Bereich ist an der Innenseite 11 des Lüftungsgeräts 1 der Radiator 13, daran anschließend der Kanal 14 mit den beiden Kammern 141 und 142 und schließlich an die Außenseite 12 des Lüftungsgeräts 1 angrenzend ein Wärmeübertragungselement 15 angeordnet. Unterhalb des zentralen Bereiches ist ein weiterer Ventilator 33 diagonal versetzt zu dem Ventilator 31 angeordnet. Unterhalb des Ventilators 33 ist ein weiterer Teil 151 des Wärmeübertragungselements 15 vorgesehen. Dieser Teil 151 des Wärmeübertragungselements 15, der als Kondensator dienen kann, erstreckt sind von dem zentralen Bereich 16 des Lüftungsgeräts nach unten bevorzugt bis zumindest auf eine Höhe, auf der an der Außenseite 12 des Lüftungsgeräts zwei Öffnungen 121 und 122 vorgesehen sind. An der Innenseite 11 des Lüftungsgeräts 1 sind ebenfalls Öffnungen für Luft vorgesehen. Zwei dieser Öffnungen 111, 113 befinden sich ebenfalls unterhalb des zentralen Bereichs 16, jedoch vorzugsweise oberhalb der Höhe der Öffnungen 121 und 122. Die Öffnungen 111, 113 sind über die Breite des Lüftungsgeräts nebeneinander angeordnet. Die andere Öffnung 112 an der Innenseite 11 des Lüftungsgeräts ist im oberen Bereich oberhalb des zentralen Bereiches 16 und besonders bevorzugt oberhalb des Ventilators 31 vorgesehen.

In dem Kanal 14, insbesondere in der Kammer 141, können Düsen vorgesehen sein, über die Kondensat, das an dem Teil 151 des Wärmeübertragungselements 15 erzeugt und gegebenenfalls in einem am Boden des Lüftungsgeräts 1 vorgesehenen Auffangbehälter dargestellt) aufgefangen wurde, in die Kammer 141 und vorzugsweise auf die Rückseite des Radiators 13 gesprüht werden kann. Die Düsen können aber auch beispielsweise in der Kammer 142 vorgesehen sein, um die Luftfeuchtigkeit der Umluft zu erhöhen.

In Figur 3 ist nun der Luftweg der Zuluft durch Pfeile angedeutet. Der Übergang von einer durchgezogenen Linie in eine gestrichelte Linie deutet an, daß sich der Luftstrom unterhalb der Zeichnungsebene bewegt. Wie sich aus Figur 3 ergibt, tritt über die Öffnung 122 Außenluft in das Lüftungsgerät 1 ein. Diese strömt zunächst an einem ersten Bereich 151 des Wärmeübertragungselements 15 vorbei und wird dann über den Zuluftventilator 33 in einen zweiten Bereich 152 des Wärmeübertragungselements 15, das beispielsweise einen Plattenwärmeübertrager darstellen kann, geleitet. Die Außenluft durchströmt diesen vorzugsweise in diagonaler Richtung und gelangt so zu dem Umluftventilator 31, über den die behandelte Außenluft als Zuluft über die Öffnung 112 in den zu belüftenden Raum geleitet wird.

Figur 4 zeigt den Luftweg der Abluft in dem Lüftungsgerät 1. Die Abluft tritt über die Öffnung 111, die sich im unteren Bereich der Innenseite 11 des Lüftungsgeräts 1 befindet, in dieses ein. Die Öffnung 111 wird bevorzugt im unteren Bereich der Innenseite angeordnet, da die Luft, die sich dort in dem Raum 2 befindet, bereits kühler und staubreicher ist. Es wird also vermieden, dass warme Luft aus dem Raum ausgetragen wird, wodurch die Anforderung an ein Heizelement 13 steigen würden. Durch den höheren Staubgehalt in der Luft kann weiterhin sichergestellt werden, dass die Luft, wenn diese in das Lüftungsgerät eintritt und dort durch einen Filter geleitet wird, effizient gereinigt wird. Schließlich wird durch das Anordnen der Abluftöffnung im unteren Bereich erzielt, dass die Abluft nicht außerhalb des Lüftungsgeräts mit der Zuluft vermischt wird, wodurch die Effizienz des Lüftungsgeräts verringert würde.

Von der Öffnung 111 tritt die Luft in die Kammer 142 des Kanals 14 ein und durchströmt diesen über seine gesamte Länge, die der Länge des zentralen Bereiches 16 in etwa entspricht. Dort tritt die Luft in den Abluftventilator 32 ein, der diese dann in das Wärmübertragungselement 15 leitet. In der dargestellten Ausführungsform durchströmt die Abluft den Bereich 152 des Wärmeübertragungselements 15 diagonal in einer Richtung, die zu der Strömungsrichtung der Zuluft in dem Wärmübertragungselement 15 quer liegt. Nachdem die so behandelte Abluft den Bereich 152 des Wärmübertragungselements 15 verlassen hat, strömt diese an dem Teil 151 des Wärmübertragungselements 15 entlang und gelangt über die Öffnung 121 als Fortluft in die Umgebung.

In Figur 5 ist der Luftweg der Umluft in dem Lüftungsgerät 1 gezeigt und wird im Folgenden beschrieben. Über eine Öffnung 113 an der Innenseite 11 des Lüftungsgeräts 1 tritt Umluft in das Lüftungsgerät ein. Von dort strömt diese in die Kammer 141 des Kanals 14 und strömt über die gesamte Höhe des Radiators 13 an diesem entlang. Nach dem Austritt aus dem Kanal 14 gelangt die Umluft in den Umluftventilator 31, wo sie mit der Zuluft gemischt wird und über die Öffnung 112 an den zu belüftenden Raum 2 abgegeben wird.

Die Gesamthöhe des Lüftungsgeräts wird vorzugsweise so ausgelegt, dass die Druckdifferenz zwischen den Einlass- und Auslassöffnungen bei sich erwärmender bzw. abkühlender Zuluft, Umluft und Abluft mehr als 2 Pa beträgt.

Mit der Luftführung, die unter Bezug auf die Figuren 3, 4 und 5 beschrieben wurde, kann im Hinblick auf die in dem zu belüftenden Raum einzustellenden Bedingungen eine angepaßte Behandlung der Luft erfolgen. Wird beispielsweise der Radiator als Heizelement, z.B. als Warmwasser-Radiator, betrieben, und wird davon ausgegangen, dass die Temperatur in dem zu belüftenden Raum 2 höher ist als die der Umgebung, so erfolgen in dem Lüftungsgerät die folgenden Behandlungen der verschiedenen Luftströme: Die Außenluft, die in das Lüftungsgerät 1 über die Öffnung 122 eintritt, tritt über den Bereich 151 des Wärmübertragungselements 15 mit der aus dem zu belüftenden Raum 2 stammenden Abluft, die bereits durch das Wärmübertragungselement 15 geströmt ist, in thermischen Kontakt. Dadurch kann die Zuluft bereits zu einem gewissen Grad aufgewärmt werden. Anschließend kann der Zuluft weitere Wärme von der Abluft zugeführt werden und zwar in dem Bereich 152 des Wärmübertragungselements 15, indem die Zuluft und die Abluft in der dargestellten Ausführungsform quer zueinander geführt werden. Anschließend gelangt die bereits vorgeheizte Zuluft in den Umluftventilator, wo sie mit der, wie später beschrieben, behandelten Umluft vermischt wird. Beim Eintritt in den zu belüftenden Raum weist die Zuluft also bereits eine gegenüber der Außenluft erhöhte Temperatur auf, wodurch die Anforderungen an den Radiator 13, der als Heizelement fungiert, erniedrigt werden. Dieser kann also kleiner ausgestaltet werden, als ein herkömmlicher Heizkörper, bei dem die gesamte Zuluft in dem zu belüftenden Raum 2 von der Außentemperatur auf die Raumtemperatur gebracht werden muss.

Die Abluft verlässt bei Raumtemperatur den zu belüftenden Raum 2 und strömt durch die Kammer 142. Da diese Luft der Umgebung zugeführt werden soll, ist zu vermeiden, dass diese Wärme von dem Radiator 13 aufnimmt. Zu diesem Zweck kann der Radiator im Bereich der Kammer 142 an der der Kammer 142 zugewandten Seite 8 isoliert sein. Somit gelangt die Abluft bei einer Temperatur, die etwa der Raumtemperatur entspricht, zu dem Abluftventilator 32. Von dort wird die Abluft in das Wärmübertragungselement 15 geleitet, zunächst in den Bereich 152, wo diese einen gewissen Teil ihrer Wärme an die quer dazu geführte Zuluft abgibt. Die so abgekühlte Abluft wird dann an dem Bereich 151 des Wärmübertragungselements 15 entlanggeführt, wo sie weitere Wärme an die Zuluft abgeben kann. Die Abluft aus dem Raum 2 verlässt also das Lüftungsgerät als Fortluft bei einer Temperatur, die unterhalb der Raumtemperatur, und vorzugsweise weit unterhalb der Taupunkttemperatur liegt.

Die Umluft tritt bei Raumtemperatur der unteren Raumregionen in das Lüftungsgerät ein und wird in der Kammer 141 an dem Radiator 13 entlanggeführt, wo diese Wärme von dem Radiator 13 aufnehmen kann. Wenn der Radiator im Bereich der Kammer 141 an der der Kammer 141 zugewandten Seite 7 eine vergrößerte Oberfläche, z.B. durch an dieser Seite vorgesehene Rippen, aufweist, kann die Wärmezufuhr an die Umluft noch zusätzlich gesteigert werden. Die so vorgeheizte Umluft wird in dem Umluftventilator 31 mit der bereits erwärmten Außenluft vermischt, wodurch ein erwärmter Zuluftstrom erzeugt wird. Bei normalem Bedarf an Heizleistung genügt hierfür der Antrieb durch den thermischen Auftrieb. Bei erhöhtem Leistungsbedarf führt der Antrieb durch den Ventilator 31 zu erzwungener Konvektion und damit zu stark vergrößertem Wärmeübergang, wodurch die Leistungsabgabe des Radiators beträchtlich, typisch um den Faktor 2 bis 3, gesteigert wird.

Wird der Radiator 13 als Kühlelement betrieben, indem beispielsweise Kaltwasser verwendet wird, und wird davon ausgegangen, dass die Temperatur in dem zu belüftenden Raum geringer ist als die Umgebungstemperatur (wie beispielsweise im Sommer), so werden die Temperaturen der einzelnen Luftströme in dem Lüftungsgerät 1 wie folgt eingestellt. Die kühle Abluft wird in dem Wärmeübertragungselement 15 und über den Bereich 151 des Wärmübertragungselements 15 durch die wärmere Außenluft aufgewärmt, wodurch die Außenluft einen Teil ihrer Wärme abgibt. Zusätzlich wird die Umluft, die in der Kammer 141 an dem Radiator entlang strömt, durch diesen abgekühlt. Die mit der abgekühlten Außenluft vermischte gekühlte Umluft wird dann über den Umluftventilator 31 in den Raum geleitet. In ähnlicher Weise kann zu warme Raumluft auch bei noch wärmerer Außenluft allein im Umluftbetrieb abgekühlt werden.

Das erfindungsgemäße Lüftungsgerät nutzt den Umluftbetrieb mit Radiator nicht nur zur Heizung mittels Strahlung und Konvektion an der Innenseite 11, sondern auch zur Unterstützung der Durchmischung der Raumluft und damit zur gezielten Änderung der Temperatur des Raums, im Gegensatz zum Stand der Technik insbesondere auch der Temperatur der unteren Schichten des Raums. Im Vergleich mit dem Stand der Technik wird insbesondere die Kühlung durch die Möglichkeit eines aktiven Vorbeileitens von Luft, gegebenenfalls durch Ventilatorunterstützung, in der Kammer 143 begünstigt. Dies kann den Verzicht auf eine herkömmliche Klimaanlage ermöglichen.

Neben der thermischen Behandlung der Luft und der Durchmischung in dem Lüftungsgerät 1 kann die Luft in dem Lüftungsgerät 1 auch in anderer Hinsicht behandelt werden. So kann beispielsweise deren Staubgehalt und Feuchtegehalt in dem Lüftungsgerät eingestellt werden.

Um Staubpartikel und andere in der Luft enthaltene Verunreinigungen aus der Luft abzutrennen, können in dem Lüftungsgerät 1 Filter vorgesehen sein. Diese sind vorzugsweise im Bereich der Öffnung 122, über die die Außenluft in das Lüftungsgerät 1 eintritt, und im Bereich der Öffnung 113, über die die Umluft in das Lüftungsgerät 1 eintritt, vorgesehen. Dadurch kann mit dem Lüftungsgerät zum einen verhindert werden, dass Verunreinigungen von außen in den Raum 2 eintreten und zum anderen können aus dem Raum 2 stammende Verunreinigungen abgetrennt werden. Das Lüftungsgerät sorgt also nicht nur für eine gute Durchmischung der Luft in dem Raum 2 und eine Zufuhr von Frischluft, sondern reinigt gleichzeitig auch die in dem Raum 2 befindliche Luft im Umluftbetrieb.

Der Feuchtegehalt in der Luft kann über geeignete Luftführung in dem Lüftungsgerät 1 geregelt werden. Dies erfolgt beispielsweise über gezielte Kondensation der Luftfeuchte in dem Lüftungsgerät. Vorzugsweise erfolgt die Kondensation in dem Bereich 151 des Wärmübertragungselements 15. Dieser stellt vorzugsweise einen offenen Wärmetauscher dar und erlaubt so die Behandlung des durch diesen erhaltenen Kondensats in dem Lüftungsgerät 1. Beispielsweise kann sowohl die Kondensatoroberfläche als auch das erhaltene Kondensat mittels geeigneter Vorrichtungen mit UV-Strahlen bestrahlt werden. Dadurch wird das Kondensat sterilisiert und eventuell darin enthaltene Sporen abgetötet. Es kommt also nicht zu Schimmelbildung. Diese kann bei Lüftungsgeräten des Stands der Technik nicht vermieden werden, so dass in den bekannten Lüftungsgeräten eine Kondensation weitestgehend vermieden werden muss. In dem erfindungsgemäßen Lüftungsgerät hingegen wird die Kondensation gezielt bewirkt. Dies wird insbesondere durch eine Temperatursenkung in dem Abluftstrom bis unter den Kondensationspunkt, erzielt. Da Wasser eine hohe Verdampfungswärme aufweist, läßt sich durch das bewußte Kondensieren, wie dies mit dem erfindungsgemäßen Lüftungsgerät ermöglicht wird, Energie in hohem Maße aus der Abluft zurückgewinnen. Das erhaltene Kondensat kann dann zur Einstellung einer gewünschten Luftfeuchtigkeit in dem Raum 2 verwendet werden. Es kann in dem Fall, in dem die Luftfeuchtigkeit in dem Raum 2 gesenkt werden soll, über Düsen in die Umgebung verspritzt werden. Soll andererseits die Luftfeuchtigkeit in dem Raum 2 erhöht werden, so kann das Kondensat dem Umluft- oder dem Zuluftstrom zugeführt werden und in diesem verdampft werden, beispielsweise durch Aufbringen auf die der Innenseite des Lüftungsgeräts zugewandte Seite des Radiators 13. Dadurch gelangt die aus der Luft in Form des Kondensats gewonnene Feuchtigkeit in den Raum 2 zurück. Zum Versprühen des Kondensats kann eine unterhalb des Kondensators 151 angeordnete Pumpe verwendet werden.

Der in den Figuren 3 bis 5 dargestellte Teil 151 des Wärmübertragungselements 15, der als Kondensator dienen kann, weist vorzugsweise eine glatte und eine berippte Seite auf. Da der Wärmeübergang bei Kondensation wesentlich größer ist als der Wärmeübergang gegenüber Luft, kann die Fläche des Wärmeübertragungselements 151 auf der Abluftseite wesentlich kleiner sein als auf der Zuluftseite. Vereist ein solcher Kondensator wird die Wärmeübertragung von selbst wieder schlechter und der Kondensator taut von selber wieder ab.

Der in den Figuren 3 bis 5 dargestellte Kondensator 152 kann vorzugsweise bewegt werden. Er kann schwenkbar oder verschiebbar gelagert sein oder so ausgelegt sein, dass er dem Lüftungsgerät entnommen und in einer anderen Ausrichtung wieder in dieses eingeführt werden kann. Soll ein Wärmeaustausch zwischen dem Außenluft- und dem Abluftstrom vermieden werden, so kann dieser gegenüber der in den Figuren gezeigten Position um 90° gedreht werden, wodurch dieser auf beiden Seiten, die den Luftströmen zugewandt sind, glatte Oberflächen aufweist und durch die Rippen, die sich dann zwischen diesen beiden Seiten befinden, eine Isolierung erzielt wird. Ist der Teil 151 des Wärmeübertragungselements 15 in dieser Position, kann das Lüftungsgerät daher ideal zur Kühlung des Raumes verwendet werden.

Eine Regelung der Luftströme und der Luftzusammensetzung kann bei dem Lüftungsgerät auf verschiedene Weisen erfolgen. Vorzugsweise wird die Regelung nach vorgegebenen Werten vorgenommen. So kann eine Regelung beispielsweise in Abhängigkeit einer in dem zu belüftenden Raum herrschenden CO₂-Konzentration erfolgen. Diese Konzentration wird an einer geeigneten Stelle in dem zu belüftenden Raum oder im Abluftstrom gemessen und bei einer zu hohen Konzentration wird der Luftdurchsatz des Lüftungsgeräts so geregelt, dass dieses Außenluft in das Lüftungsgerät ansaugt und als Zuluft in den Raum einführt. Die Regelung kann beispielsweise so ausgelegt sein, dass bei einer CO₂-Konzentration von mehr als 500 ppm die Belüftung einsetzt und eine vorbestimmte CO₂-Konzentration von beispielsweise 800 ppm nicht überschritten wird, da ab einem CO₂-Gehalt von 1000ppm in der Luft bei Personen, die sich in dem Raum aufhalten, Ermüdungserscheinungen zu erwarten sind.

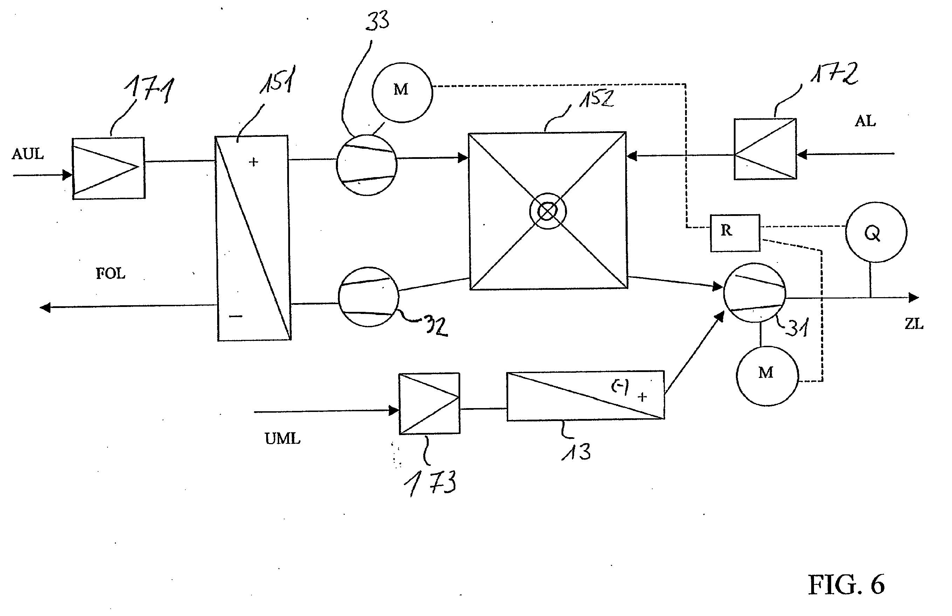

Auch eine Regelung nach der in dem Raum herrschenden Temperatur ist möglich, wobei in diesem Zusammenhang auf das weiter unten beschriebene, in Figur 6 dargestellte Ausführungsbeispiel verwiesen wird. Alternativ oder zusätzlich kann die Regelung des Lüftungsgeräts in Abhängigkeit der in dem Raum gemessenen Luftfeuchtigkeit erfolgen. Dadurch kann eine zu hohe Luftfeuchtigkeit, die zu Schimmelbildung in dem Raum führen kann, vermieden werden. Weitere mögliche Regelungen berücksichtigen die Tatsache, ob sich eine Person in dem Raum befindet, was über Anwesenheitsdetektoren erfasst werden kann, oder die Tatsache, ob Wind- und Sonnenstrahlungseinwirkungen vorliegen und wie stark diese sind. Weiterhin kann das Lüftungsgerät nach dem Lüftervolumenstrom, der für die Abluft und die Umluft gemessen wird, geregelt werden, beispielsweise auf einen vorgebbaren Wert. Dadurch wird eine wesentliche genauere Steuerung des Luftaustauschs ermöglicht als bei Verfahren aus dem Stand der Technik. Bei den letztgenannten wird nämlich auf einen konstanten Druck geregelt, beispielsweise auf eine Druckdifferenz vor und nach einem Ventilator. Diese ist jedoch von vielerlei Faktoren abhängig und nicht allein von dem Volumenstrom durch den Ventilator. Schließlich ist es auch möglich, das Lüftungsgerät mit einem Rechner zu verbinden, der permanent das Heizungs- und Lüftungsverhalten optimiert.

Als Messvorrichtungen oder Detektionsvorrichtungen können bekannte Sensoren oder andere Einrichtungen verwendet werden, die vorzugsweise elektrisch leitend oder über Funk mit dem Lüftungsgerät gekoppelt sind.

Die Einstellung bestimmter Werte, die in dem Lüftungsgerät beispielsweise in einer Steuereinrichtung vorgegeben sein können, kann auf verschieden Arten erzielt werden. Bei der Ausgestaltung des Lüftungsgeräts, bei dem die Öffnungen, wie oben beschrieben angeordnet sind, kann beispielsweise die natürliche Strömung der Luft genutzt werden. So wird der Auftrieb der sich erwärmenden Zuluft genutzt, um diese in dem Lüftungsgerät nach oben steigen zu lassen und beim Strömen der Abluft durch das Wärmeübertragungselement 15, bei dem die Abluft Wärme abgeben kann, wird ein Abtrieb erzeugt, durch den die Luft zu der Austrittsöffnung für Fortluft gelangt. Auch bei der Umluft wird der natürliche Auftrieb in dem Lüftungsgerät genutzt. Die Abluft wird dadurch gegebenenfalls auch ohne Ventilatorenantrieb nach dem Heberprinzip in das Lüftungsgerät eingesaugt.

Darüber hinaus kann der Windeinfluß auf der Außenseite des Lüftungsgeräts, insbesondere auf die dort angeordneten Öffnungen, zur Unterstützung der Ventilatoren genutzt werden. Im Idealfall läßt sich dadurch die Energie, die durch die Ventilatoren aufgebracht werden muss, auf Werte von nahezu Null bringen. Damit geht der Vorteil einher, dass die Geräusche, die durch die Ventilatoren erzeugt werden, verringert werden. Optimal werden diese Vorteile bei einem Lüftungsgerät genutzt, das eine große Höhe von beispielsweise mehr als 1,50m aufweist.

Weiterhin kann die Regelung des Luftdurchsatzes durch das Lüftungsgerät durch Steuerung der Lüfter und Betätigung von Außenventilen erfolgen. Die Außenventile können insbesondere an oder in der Nähe der Öffnung 122 für die Regelung der Zuluft, der Öffnung 121 für die Regelung der Abluft oder der Öffnung 113 für die Regelung der Umluft vorgesehen sein. Wird beispielsweise ein Volumenstrom gemessen, der anzeigt, dass zuviel Außenluft in den Raum eingebracht wird, so kann der Zuluftventilator zunächst zurückgeschaltet, schließlich abgeschaltet werden. Tritt immer noch zu viel Luft ein, so kann das entsprechende Außenventil stufenweise geschlossen werden bis der einströmende Luftstrom in dem gewünschten Bereich liegt.

In Figur 6 ist in einem Blockdiagramm schematisch der Aufbau einer Ausführungsform des Lüftungsgeräts wiedergegeben, aus dem sich auch eine Möglichkeit der Steuerung des Gerätes ergibt.

Die Außenluft AUL tritt durch einen Filter 171 hindurch, um dann in dem Teil 151, der als Kondensator dient, einer Temperaturänderung unterzogen zu werden. Wird die Fortluft FOL, die auch durch den Kondensator 151 behandelt wird, in diesem abgekühlt, so kann man das Teil 151 als ein außenluftgekühlten Luftfeuchte-Kondensator bezeichnen. Nach dem Kondensator 151 wird die Außenluft über einen motorbetätigten Ventilator 33 in den Bereich 152 des Wärmeübertragungselements 15 geleitet, um eine Übertragung von Wärme der in einem Filter 172 gefilterten Abluft AL zu ermöglichen. Nach dem Verlassen des Wärmeübertragungselements 15 wird die behandelte Außenluft dem motorbetriebenen Ventilator 31 zugeführt, in dem diese mit der vom Filter 173 gefilterten und vom Radiator 13 erwärmten Umluft UML vermischt wird.

In der Figur 6 ist angedeutet, wie die Steuerung des Lüftungsgeräts nach der CO₂-Konzentration erfolgen kann. An der Stelle Q wird beispielweise die CO₂-Konzentration X_{CO2} gemessen. Das Messergebnis wird an den Regler R übermittelt, der daraufhin die Ventilatoren 33 und 31 steuert, bis ein vorgegebener X_{CO2}-Wert erzielt wurde. Eine Reduzierung der Leistung des Ventilators 33 führt zu einer reduzierten Zuführung von Außenluft und damit zu einer Erhöhung der CO₂-Konzentration im Innenraum. Eine Erhöhung der Leistung des Ventilators 31 führt zu einem höheren Anteil von Umluft in dem Luftstrom, der dem Raum zugeführt wird, und damit zu einer Verringerung der CO₂-Konzentration im Innenraum.

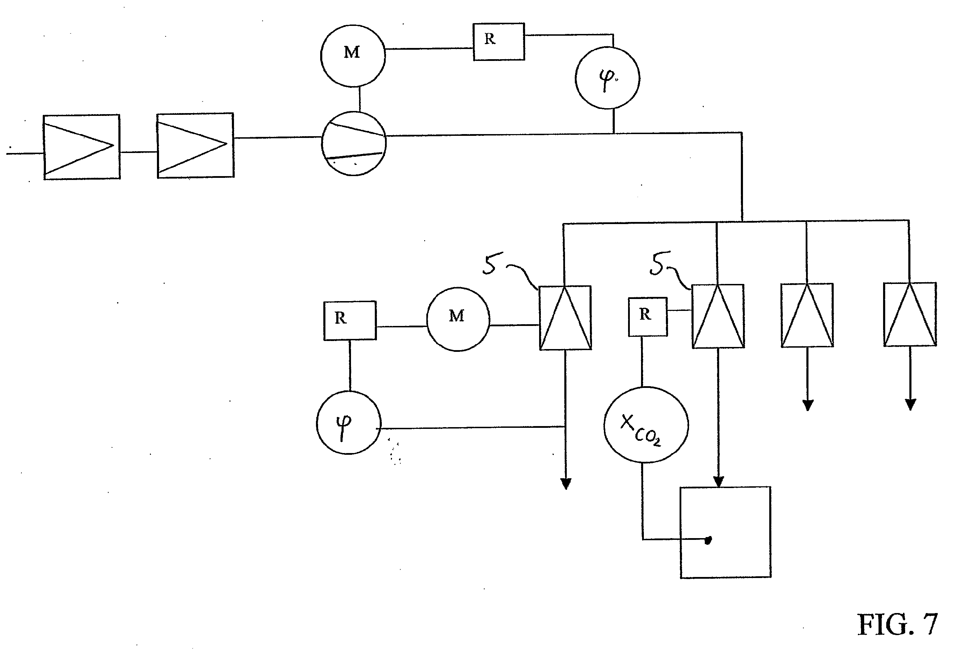

In Figur 7 wird schematisch dargestellt, wie eine Steuerung des Lüftungsgeräts nach dem Volumenstrom erfolgen kann. Im Gegensatz zu Konstantdruckregelungen, die bei herkömmlichen Lüftungsgeräten verwendet werden und einen reinen Druckvergleich zwischen verschiedenen Punkten in dem Lüftungsgerät durchführen, wird in dem erfindungsgemäßen Lüftungsgerät vorzugsweise der Volumenstrom gemessen und das Lüftungsgerät danach gesteuert. Dies weist den Vorteil auf, dass ein Sollwert vorgegeben werden kann, der mehrere Einflüsse berücksichtigt. So kann beispielsweise die CO₂-Konzentration, die Innenfeuchte, der Außendruck, etc. bei dem vorgegebenen Volumenstrom-Wert berücksichtigt werden. Eine solche Berücksichtigung äußerer Einflüsse ist bei einer Regelung nach dem Ergebnis eines Vergleichs von absoluten Drücken nicht möglich. Wie in Figur 7 gezeigt, werden zu diesem Zweck Volumenstromregler 5 verwendet, die beispielsweise mit einem Regler R ausgestattet sind, der die im dem Raum 2 an einer Messstelle gemessene CO₂-Konzentration X_{CO2} berücksichtigt, oder die mit einem Regler verbunden sind, der die gemessene Luftfeuchte ϕ, aufgenommen von einem oder mehreren Feuchtesensoren, berücksichtigt.

## Patentansprüche

1. Lüftungsgerät (1) zur Belüftung eines Raumes, das zumindest einen Ventilator (31, 32, 33), sowie zumindest jeweils eine Öffnung (111, 112) an der Innenseite (11), die im eingebauten Zustand dem zu belüftenden Raum (2) zugewandt ist und eine Öffnung (121, 122) an der Außenseite (12) aufweist, die im eingebauten Zustand dem zu belüftenden Raum (2) abgewandt ist, **dadurch gekennzeichnet, dass** das Lüftungsgerät (1) eine Steuereinheit (5, R) umfasst, die der Steuerung oder Regelung mindestens eines einen Luftstrom durch das Lüftungsgerät beeinflussenden Elements in Abhängigkeit des Luftstroms, der durch die auf der Außenseite (12) des Gerätes vorgesehene Öffnung (121, 122) fließt, dient.

2. Lüftungsgerät nach Anspruch 1, **dadurch gekennzeichnet, daß** das mindestens eine einen Luftstrom durch das Lüftungsgerät beeeinflussende Element der mindestens eine Ventilator (31, 32, 33) und/oder mindestens ein Schließelement für die jeweils mindestens eine Öffnung (111, 112, 121, 122) ist.

3. Lüftungsgerät nach Anspruch 1 oder 2, **dadurch gekennzeichnet, dass** die Steuereinheit mit mindestens einer Messeinrichtung (T, M) verbunden ist.

4. Lüftungsgerät nach Anspruch 3, **dadurch gekennzeichnet, dass** die Messeinrichtung eine Messeinheit zur Messung des Luftstroms, der durch die auf der Außenseite (12) des Gerätes (1) vorgesehene Öffnung (121, 122) fließt, umfasst.

5. Lüftungsgerät nach einem der vorhergehenden Ansprüche, **dadurch gekennzeichnet, dass** die Steuereinrichtung eine Soll-Wert-Einheit umfasst, in der vorgegebene Soll-Werte, insbesondere für die Luftströmung, eingegeben sind.

6. Lüftungsgerät nach einem der vorhergehenden Ansprüche, **dadurch gekennzeichnet, dass** die Steuereinheit eine Vergleichseinheit aufweist, die gemessene Ist-Werte mit Soll-Werten vergleicht.

7. Verfahren zur Steuerung eines Lüftungsgeräts, das zumindest einen Ventilator (31, 32, 33) und zumindest jeweils eine Öffnung (111, 112) an der Innenseite (11), die im eingebauten Zustand dem zu belüftenden Raum (2) zugewandt ist, und eine Öffnung (121, 122) an der Außenseite (12) aufweist, die im eingebauten Zustand dem zu belüftenden Raum (2) abgewandt ist, sowie eine Steuereinheit, wobei mindestens ein einen Luftstrom durch das Lüftungsgerät beeinflussendes Element in Abhängigkeit von gemessenen Luftströmungswerten gesteuert oder geregelt wird.

8. Verfahren nach Anspruch 7, **dadurch gekennzeichnet, daß** das einen Luftstrom durch das Lüftungsgerät beeinflussende Element von dem mindestens einen Ventilator (31, 32, 33) und/oder von mindestens einem Schließelement für die mindestens eine Öffnung (111, 112, 121, 122) gebildet wird.

9. Verfahren nach Anspruch 7 oder 8, **dadurch gekennzeichnet, dass** die Steuereinheit in Abhängigkeit des Luftstroms, der durch die auf der Außenseite (12) des Gerätes (1) vorgesehene Öffnung (121, 122) fließt, den Antrieb des mindestens einen Ventilators (31, 32, 33) steuert oder regelt.

10. Verfahren nach einem der Ansprüche 7 bis 9, **dadurch gekennzeichnet, dass** der Antrieb des mindestens einen Ventilators (31, 32, 33) als Funktion des Luftstroms, der durch die in der Außenseite (12) des Gerätes vorgesehene Öffnung (121, 122) fließt, und in Abhängigkeit vorgegebener Soll-Werte gesteuert oder geregelt wird.

11. Verfahren nach einem der Ansprüche 9 oder 10, **dadurch gekennzeichnet, dass** die Antriebsleistung des Ventilators (31, 32, 33) gesenkt wird, wenn der Wert des Luftstroms, der durch die auf der Außenseite (12) des Gerätes (1) vorgesehene Öffnung (121, 122) fließt, ansteigt.

12. Verfahren nach einem der Ansprüche 7 bis 11, **dadurch gekennzeichnet, dass** die mindestens eine Öffnung (121, 122) an der Außenseite (12) des Lüftungsgeräts (1) zumindest teilweise geschlossen wird, wenn der Luftsstrom, der durch die auf der Außenseite (12) des Gerätes (1) vorgesehene Öffnung (121, 122) fließt, einen Grenzwert übersteigt.

13. Verfahren nach einem der Ansprüche 7 bis 12, **dadurch gekennzeichnet, dass** die Steuereinheit das mindestens eine Schließelement erst zumindest teilweise schließt, wenn der mindestens eine Ventilator (31, 32, 33) nicht angetrieben wird.

14. Verfahren nach einem der Ansprüche 7 bis 13, **dadurch gekennzeichnet, dass** die Steuereinheit den mindestens einen Ventilator (31, 32, 33) und das mindestens eine Schließelement so steuert oder regelt, dass ein vorgegebener Wert eines Luftstroms in dem Lüftungsgerät eingestellt wird.
